Europäisches Patentamt

European Patent Office

Office européen des brevets

(19)

(11) Numéro de publication : **0 099 953**
**B1**

(12) **FASCICULE DE BREVET EUROPÉEN**

(45) Date de publication du fascicule du brevet :
30.12.86

(51) Int. Cl.⁴ : **A 01 F 15/00**

(21) Numéro de dépôt : **82401387.4**

(22) Date de dépôt : **27.07.82**

(54) **Presse à balles rectangulaires.**

(43) Date de publication de la demande :
**08.02.84 Bulletin 84/06**

(45) Mention de la délivrance du brevet :
**30.12.86 Bulletin 86/52**

(84) Etats contractants désignés :
**DE FR GB IT NL**

(56) Documents cités :
**DE-A- 1 936 056**
**DE-A- 2 513 297**
**FR-A- 1 373 562**
**FR-A- 2 016 313**

(73) Titulaire : **DEERE & COMPANY**
**1 John Deere Road**
**Moline Illinois 61265 (US)**

(72) Inventeur : **Magin, Ludwig**
**Am Deutschhof 2 + 4**
**D-6707 Schifferstadt (DE)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

## Description

La présente invention se rapporte d'une façon générale aux presses à balles rectangulaires.

Les presses à balles rectangulaires existantes comportent généralement un châssis muni de roues, destiné à être attelé derrière un véhicule tracteur, habituellement un tracteur agricole, par l'intermédiaire d'une flèche d'attelage ou d'un timon. Le ramasseur de ces presses est alors orienté tranversalement à la direction de déplacement, et des moyens tels qu'un ameneur rotatif ou alternatif ou une vis transporteuse sont prévus pour alimenter, à partir de ce ramasseur, une chambre ou un canal de compression orienté dans le sens longitudinal de la presse et dans lequel les produits de récolte ramassés, tels que le fourrage, sont comprimés pour être ensuite liés en une balle rectangulaire par un système de liage. Les balles sont éjectées à l'arrière de la presse.

Ces presses de type classique présentent un certain nombre d'inconvénients. Ainsi, elles comportent un châssis équipé de roues et d'une flèche d'attelage, ce qui augmente leur prix de revient. Par ailleurs, leur encombrement, notamment en longueur, est loin d'être négligeable. En outre, du fait de leur mode de raccordement au véhicule tracteur et de leur position par rapport à celui-ci pendant le travail, un changement de position de la flèche d'attelage est chaque fois requis pour passer de la position de travail sur le champ à la position de déplacement sur route et vice-versa. La conduite de ces presses est également délicate. En effet, le conducteur du véhicule tracteur doit, pendant le travail, surveiller en regardant vers l'arrière le travail de la presse attelée derrière son véhicule, ce qui comme on le comprend aisément représente une charge supplémentaire pour la conduite de ce véhicule. Lors d'un déplacement sur route, il est en outre délicat de diriger sur des distances assez longues un attelage comprenant par exemple un tracteur, une presse à balles et une remorque, c'est-à-dire une succession de trois véhicules reliés entre eux par deux articulations. Enfin, compte tenu de leur agencement, de telles presses ne sont généralement attelées qu'à un tracteur agricole.

On a déjà proposé (FR-A-2 016 313 et DE-A-1 936 056) de réaliser des presses à balles rectangulaires munies, en arrière d'un ramasseur, d'une chambre de compression orientée transversalement au châssis de la presse, cette chambre de compression comportant un orifice orienté vers le ramasseur et des moyens d'amenée étant prévus pour assurer le déplacement transversal des produits de récolte ramassés par les parties latérales du ramasseur vers cet orifice d'entrée dans la chambre de compression. Ces presses à balles, de longueur plus faible, sont équipées à leur partie avant d'organes permettant un raccordement au système d'attelage trois points d'un tracteur agricole et demeurent directement derrière le tracteur auquel elles sont attelées pendant le travail.

Toutefois, ces presses à balles rectangulaires connues, bien que de longueur plus faible, sont également équipées de roues porteuses et constituent ainsi des machines destinées à être attelées à l'arrière d'un tracteur agricole et à être remorquées par celui-ci, de sorte que les inconvénients des presses mentionnées précédemment ne sont supprimés qu'en partie. En outre, étant donné leur position derrière le tracteur pendant le travail, la largeur de ramassage est limitée à l'écartement entre les roues du tracteur, car dans le cas contraire les produits de récolte ramassés seraient écrasés par le passage des roues.

Le but de l'invention est de remédier aux inconvénients précités par la réalisation d'une presse à balles rectangulaires pouvant être portée par un tracteur ou bien une machine ou un véhicule agricole, en évitant ainsi les problèmes d'attelage et d'encombrement et les difficultés de manœuvre généralement rencontrés avec les machines existantes.

L'invention concerne en conséquence une presse à balles rectangulaires du type comportant un châssis portant à sa partie avant un dispositif ramasseur orienté transversalement à la direction d'avance de la presse, une chambre de compression également orientée dans le sens transversal, prévue sur ce châssis en arrière de ce dispositif ramasseur quand on considère la direction de déplacement de la presse lors du travail, cette chambre de compression présentant un orifice d'entrée des produits de récolte orienté vers ce ramasseur, des moyens d'amenée faisant converger les produits de récolte ramassés par ce ramasseur vers cet orifice pour leur pénétration dans la chambre de compression, des moyens de compression des produits de récolte dans cette chambre de compression, un système de liage des balles formées par ces moyens de compression et un dispositif de raccordement à un attelage trois points de tracteur ou de machine ou de véhicule agricole, caractérisée en ce que ce dispositif de raccordement à cet attelage trois points est prévu à la partie arrière du châssis de la presse et en ce que la presse ainsi accouplée au tracteur ou analogue est supportée à partir de cet attelage trois points.

Suivant une disposition avantageuse, ce dispositif de raccordement à l'attelage trois points d'un tracteur ou d'une machine agricole est disposé vers le milieu de la largeur de la partie arrière du châssis de la presse, en réalisant sensiblement un équilibrage latéral de celle-ci par rapport à cet attelage trois points.

Etant donné que les organes les plus lourds de la presse, tels que la chambre de compression, le piston de compression et le châssis principal sont alors dirigés vers le tracteur, tandis que le ramasseur moins lourd se trouve à la partie avant de la presse, le moment exercé par l'ensemble sur le système d'attelage trois points du tracteur ou de la machine est relativement faible, et ainsi la presse peut être aisément portée par le tracteur ou la machine, sans que des roues porteuses soient nécessaires.

Lors du raccordement du châssis de la presse à un attelage trois points de tracteur agricole, par exemple, la presse à balles suivant l'invention constitue ainsi un ensemble porté rendu solidaire du tracteur.

Suivant un mode de réalisation paraissant jucicieux, les moyens d'amenée prévus entre le dispositif ramasseur et l'orifice d'entrée des produits dans la chambre de compression peuvent être constitués par deux éléments transporteurs s'étendant selon une disposition convergente depuis des points voisins des extrémités du dispositif ramasseur jusqu'en des points voisins des côtés de l'orifice d'entrée des produits dans la chambre de compression.

Ces éléments transporteurs, peuvent notamment être constitués par des bandes transporteuses sans fin passant autour de rouleaux à axe vertical prévus aux points mentionnés ci-avant l'un au moins des rouleaux de chaque transporteur étant entraîné positivement afin d'améliorer l'effet de transport exercé par les bandes transporteuses celles-ci peuvent être munies sur leurs faces extérieures de moyens d'entraînement tels que des dents, de préférence flexible, des aspérités ou des moyens équivalents.

Du fait de la disposition de la chambre de compression transversalement à la direction de déplacement de la presse, les balles sont déchargées latéralement après leur liage.

Suivant une disposition avantageuse, les moyens de compression conjugués de manière classique à la chambre de compression sont placés d'un côté du châssis de la presse, vers une extrémité de la chambre de compression. Ces moyens peuvent être de type quelconque. Ainsi, ils peuvent être constitués si désiré par un piston dont le déplacement alternatif est assuré par un vérin hydraulique ou par un système à manivelle et bielle par exemple.

Le système de liage de la presse est alors prévu sur le côté de celle-ci opposé au dispositif de compression. Il comprend de la manière usuelle le lieur et les noueurs, qui peuvent être de type quelconque.

Suivant une disposition paraissant judicieuse, les moyens de compression sont prévus d'un côté de la presse derrière le dispositif ramasseur et le châssis de la presse s'étend latéralement du côté opposé au-delà de ce dispositif ramasseur, pour le déchargement latéral des balles formées et liées. Le système de liage peut alors être prévu dans cette partie du châssis s'étendant latéralement au-delà de ce dispositif ramasseur, et cette partie en saillie latérale du châssis peut également être agencée afin de servir de réserve pour la ficelle de liage ou le lien équivalent utilisé.

L'entraînement des organes mobiles de la presse peut être assuré judicieusement à partir d'un arbre primaire prévu à la partie arrière du châssis de la presse et auquel sont raccordés les différents mécanismes d'entraînement et de transmission, qui peuvent être de type classique. Cet arbre primaire peut alors être relié à l'arbre de prise de force du tracteur agricole ou autre véhicule auquel la presse à balles portée est raccordée par un attelage trois points.

On comprend à la lecture de ce qui précède que la presse à balles portée suivant l'invention remédie aux inconvénients de la technique antérieure. La réalisation d'un châssis équipé d'un dispositif de raccordement à un attelage trois points est moins coûteuse que celle d'un châssis équipé d'un train porteur. En outre, l'encombrement de la presse à balles est plus réduit et son raccordement à un tracteur ou autre véhicule permet une conduite plus aisée sur route, tandis que le travail dans le champ se trouve facilité, étant donné que le conducteur peut surveiller ce travail tout en conduisant son engin et en regardant vers l'avant.

On notera également que l'agencement suivant l'invention permet de raccorder une presse à balles non seulement à un tracteur agricole, mais aussi à d'autres types de machines agricoles, telles qu'une moissonneuse-batteuse automotrice, une récolteuse-hacheuse-chargeuse automotrice ou une récolteuse-hacheuse-chargeuse attelée à un tracteur, la presse à balles se trouvant dans ce cas dans une position sensiblement latérale par rapport au tracteur compte tenu de la disposition usuelle des récolteuses-hacheuses-chargeuses de ce type. Dans ce cas, les machines sont simplement équipées d'un attelage trois points avant. On notera également que la presse à balles pourrait, au besoin, être raccordée à l'attelage trois points arrière d'un tracteur équipé d'une inversion de marche. Toutes ces possibilités représentent bien entendu des avantages pour l'utilisation de la presse.

La description qui va suivre, faite en regard des dessins annexés, donnés à titre non limitatif, permettra de mieux comprendre l'invention.

La Figure 1 est une vue schématique en plan d'une presse à balles correspondant à un mode de réalisation de l'invention.

La Figure 2 est une représentation schématique montrant la presse à balles raccordée à un attelage trois points prévu à la partie avant d'un tracteur agricole.

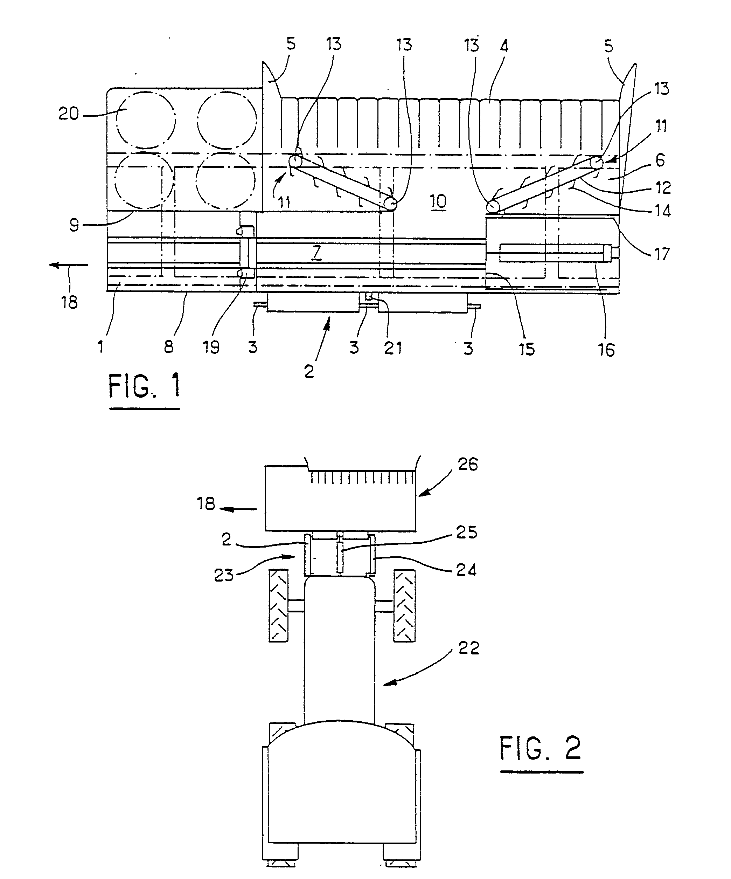

La presse à balles rectangulaires suivant l'invention comprend un châssis désigné d'une façon générale par la référence 1 et indiqué simplement en traits mixtes sur la Fig. 1, ce châssis étant formé d'une manière classique par des poutres transversales réunies par des longerons pour constituer une structure unitaire. Ce châssis 1 porte à sa partie arrière un dispositif 2 de raccordement à un attelage trois points de tracteur agricole ou autre véhicule porteur, ce dispositif comportant d'une manière en soi usuelle des tourillons 3 destinés à coopérer avec les barres inférieures et la barre supérieure d'un attelage trois points classique.

Il est prévu, à la partie avant du châssis 1 et d'un côté de celui-ci, un ramasseur transversal indique d'une façon générale en 4 et qui peut être de type classique, ce ramasseur étant délimité latéralement par des joues ou plaques 5 légèrement convergentes pour la reprise des produits de récolte, notamment du fourrage sur le sol.

La partie supérieure du ramasseur orienté transversalement 4 se prolonge vers l'arrière, au-dessus du châssis, par un fond 6 sur lequel les produits de récolte peuvent glisser pendant leur transfert à partir du ramasseur et leur compression pour former des balles rectangulaires.

Il est prévu sur le châssis 1, au-dessus de ce fond 6 et à la partie arrière de la presse, une chambre ou un canal de compression désigné par la référence 7, qui est ménagé entre une paroi arrière verticale 8 et une paroi avant également verticale 9. Cette chambre de compression 7 présente à sa partie avant un orifice 10 d'entrée des produits de récolte, qui est situé dans le cas présent sensiblement dans une position médiane par rapport à la largeur du ramasseur 4. Cet orifice 10 a une largeur nettement inférieure à celle du ramasseur 4. Pour amener les produits de récolte ramassés, glissant sur le fond 6, jusqu'à cet orifice 10 et pour les faire pénétrer dans la chambre de compression 7, il est prévu suivant l'invention deux transporteurs latéraux 11 disposés symétriquement par rapport à l'orifice d'entrée 10 et s'étendant dans une relation de convergence depuis des points voisins des joues latérales 5 du ramasseur 4 jusqu'aux côtés de l'orifice 10, afin de faire également converger les produits de récolte ramassés vers l'orifice 10 depuis la totalité de l'étendue transversale du ramasseur 4.

Ces transporteurs 11 n'ont été représentés que de façon schématique sur le dessin. Ils sont constitués avantageusement chacun par une bande transporteuse sans fin 12 passant sur des rouleaux à axe vertical 13, l'un au moins des rouleaux de chaque bande transporteuse étant entraîné positivement. Lesdites bandes transporteuses 12 présentent sur leurs faces extérieures des dents flexibles 14 qui favorisent l'entraînement des produits de récolte depuis le ramasseur 4 vers l'orifice 10.

Sur la Fig. 1, on a représenté en 15 le piston de compression des produits de récolte pour former des balles dans la chambre 7. Ce piston est d'une façon en soi classique monté à coulissement dans cette chambre, afin de pouvoir subir un déplacement en va-et-vient. La commande du piston est, suivant le mode de réalisation représenté, assurée par un vérin hydraulique indiqué schématiquement en 16. Bien que l'on ait prévu sur la presse un vérin à mouvement rectiligne, il va de soi que la presse pourrait être équipée également d'un autre dispositif d'entraînement du piston, par exemple d'un système à manivelle et bielle entraîné à partir d'un arbre rotatif.

Comme montré, au repos, le piston 15 est rappelé jusque dans une position d'effacement à l'intérieur d'un guide 17, de manière à dégager complètement l'orifice d'entrée 10 prévu pour les produits de récolte. La course du piston est étudiée pour comprimer les produits de récolte en vue de la formation d'une balle dans la chambre de compression transversale 7 de l'autre côté de l'orifice 10 par rapport au guide 17.

On comprend que, dans la presse à balles suivant l'invention, le déchargement des balles formées s'effectue latéralement comme indiqué par la flèche 18. Ce déchargement latéral tient compte du montage de la presse à la partie avant d'un véhicule porteur comme indiqué plus loin.

Sur la Fig. 1, on a représenté schématiquement en 19 les noueurs du système de liage de la presse, qui n'a pas été illustré plus en détail étant donné qu'il peut être de type classique et que sa réalisation est bien connue des techniciens spécialisés dans ce domaine.

Suivant le mode de réalisation représenté sur la Fig. 1, la partie de la chambre 7 dans laquelle s'effectue le liage avant l'éjection de la balle en 18 fait saillie latéralement par rapport au ramasseur 4. La partie du châssis qui se trouve devant cette chambre 7 et à côté du ramasseur 4 constitue ici une réserve de ficelle ou lien 20, telle qu'elle est normalement présente sur les presses à balles pour permettre le liage d'un grand nombre de balles de produits de récolte.

L'entraînement des organes mobiles de la presse à balles, notamment du ramasseur 4, des transporteurs 11, de la pompe alimentant le vérin hydraulique 16 ou du dispositif d'entraînement équivalent et du système de liage, est assuré par des mécanismes et transmissions en soi classiques et qui ne seront donc pas décrits en détail, à partir d'un arbre primaire 21 qui, comme visible sur la Fig. 1, est dirigé vers l'arrière par rapport au châssis 1. Cet arbre primaire est destiné à être raccordé à l'arbre de prise de force d'un tracteur agricole ou d'un autre véhicule porteur.

On a représenté schématiquement en 22, sur la Fig. 2, un tracteur agricole équipé à sa partie avant d'un attelage trois points 23 comprenant de manière usuelle des barres inférieures 24 et une barre supérieure 25 ainsi que les moyens de relevage classiques.

La presse à balles rectangulaires portée faisant l'objet de l'invention est indiquée schématiquement en 26. On voit qu'elle est reliée par son dispositif de raccordement 2 à l'attelage trois points 23 du tracteur agricole, de sorte que l'ensemble formé par ce tracteur et par la presse constitue un engin unitaire d'une manœuvre relativement aisée lors d'un déplacement sur route.

On constate également à l'examen de la Fig. 2 que, pendant le travail, le conducteur du tracteur peut regarder normalement dans la direction de marche de celui-ci tout en surveillant le travail de la presse, sans avoir à se retourner comme cela est le cas lorsqu'une presse est attelée à l'arrière d'un tracteur de la manière habituelle. L'arbre primaire 21 de la presse (non représenté sur la Fig. 2) est alors raccordé par un arbre intermédiaire, également non représenté car de type en soi classique, à l'arbre de prise de force avant du tracteur 22.

Lors du travail, les balles formées dans la presse 26 sont éjectées latéralement en 18, c'est-à-dire en dehors du gabarit du tracteur, de sorte qu'elles ne gênent pas la progression de celui-ci, et elles peuvent être ensuite ramassées et chargées dans une remorque indépendante ou attelée à l'arrière du tracteur. Dans ce dernier cas, l'ensemble formé par le tracteur 22, avec la presse 26, et par la remorque constitue un attelage simple qui est d'une manœuvre plus facile lors d'un déplacement sur route.

Comme indiqué précédemment, la presse à balles rectangulaires portée 26 pourrait être raccordée à des machines agricoles autres qu'un tracteur, équipées d'un attelage trois points à leur partie avant. La seule modification requise pourrait, dans ce cas, concerner la position de l'arbre primaire de la presse ou d'un arbre de prise de force de la machine, et au besoin le côté d'éjection des balles à partir de la presse.

**Revendications**

1. Presse à balles rectangulaires, du type comportant un châssis (1) portant à sa partie avant un dispositif ramasseur (4) orienté transversalement à la direction d'avance de la presse, une chambre de compression (7) également orientée dans le sens transversal, prévue sur ce châssis en arrière de ce dispositif ramasseur (4) quand on considère la direction de déplacement de la presse lors du travail, cette chambre de compression (7) présentant un orifice (10) d'entrée des produits de récolte orienté vers ce ramasseur (4), des moyens d'amenée (11) faisant converger les produits de récolte ramassés par ce ramasseur (4) vers cet orifice pour leur pénétration dans la chambre de compression (7), des moyens (15) de compression des produits de récolte dans cette chambre de cómpression (7), un système (19) de liage des balles formées par ces moyens de compression et un dispositif de raccordement (2) à un attelage trois points (23) de tracteur ou de machine ou véhicule agricole caractérisée en ce que ce dispositif de raccordement (2) à cet attelage trois points (23) est prévu à la partie arrière du châssis (1) de la presse et en ce que la presse ainsi accouplée au tracteur ou analogue est supportée à partir de cet attelage trois points (23).

2. Presse à balles rectangulaires suivant la revendication 1, caractérisée en ce que ce dispositif de raccordement (2) est disposé vers le milieu de la largeur de la partie arrière du châssis (1) de la presse.

3. Presse à balles rectangulaires suivant la revendication 1 ou 2, caractérisée en ce que ces moyens d'amenée sont constitués par deux éléments transporteurs (11) s'étendant selon une disposition convergente depuis des points voisins des extrémités du dispositif ramasseur (4) jusqu'en des points voisins des côtés de l'orifice (10) d'entrée des produits dans la chambre de compression (7).

4. Presse à balles rectangulaires suivant la revendication 3, caractérisée en ce que ces éléments transporteurs (11) sont constitués chacun par une bande transporteuse sans fin (12) passant autour de rouleaux à axe vertical (13) prévus aux points mentionnés, l'un au moins des rouleaux (13) de chaque transporteur étant entraîné positivement.

5. Presse à balles rectangulaires suivant la revendication 4, caractérisée en ce que les bandes transporteuses (12) comportent, sur leurs faces extérieures, des moyens d'entraînement tels que des dents (14) de préférence flexibles, des aspérités ou des moyens équivalents.

6. Presse à balles rectangulaires suivant la revendication 1, caractérisée en ce que les moyens de compression sont constitués par un piston (15) à mouvement alternatif, dont le déplacement est assuré par un vérin hydraulique.

7. Presse à balles rectangulaires suivant la revendication 6, caractérisée en ce que les moyens de compression (15) sont prévus d'un côté de la presse derrière le dispositif ramasseur (4), en ce que le châssis (1) de la presse et le système de liage (19) s'étendent latéralement au-delà du dispositif ramasseur (4) du côté de la presse opposé aux moyens de compression (15) pour le déchargement latéral des balles formées et liées, et en ce que la partie latérale en saillie du châssis (1) de la presse est agencée pour constituer une réserve de ficelle de liage (20).

8. Presse à balles rectangulaires suivant l'une quelconque des revendications précédentes, caractérisée en ce que l'entraînement des organes mobiles de la presse est assuré à partir d'un arbre primaire (21) prévu à la partie arrière du châssis (1) et auquel sont raccordés les différents mécanismes d'entraînement et de transmission, cet arbre primaire pouvant être relié à l'arbre de prise de force avant du tracteur agricole ou autre véhicule auquel la presse à balles est raccordée.

**Claims**

1. A rectangular bale baler of the type comprising a chassis (1) which in its front part carries a pick-up means (4) which is oriented transversely with respect to the direction of forward movement of the baler, a compression chamber (7) which is also oriented in the transverse direction and provided on said chassis rearwardly of said pick-up means (4) when considering the direction of movement of the baler when operating, said compression chamber (7) having an intake orifice (10) for the crop materials, said orifice being directed towards said pick-up mans (4), feed means (11) causing said crop materials picked up by said pick-up means (4) to converge towards said orifice for them to pass into the compression chamber (7), means (15) for compressing the crop materials in said compression chamber (7), a system (19) for binding the bales formed by said compression means and a device (2) for connection to a three-point coupling (23) on an agricultural vehicle or machine or tractor, characterised in that said device (2) for connection to said three-point coupling (23) is provided at the rearward part of the chassis (1) of the baler and that the baler when thus coupled to the tractor or the like is supported from said three-point coupling (23).

2. A rectangular bale baler according to claim 1 characterised in that said connecting device (2) is disposed towards the centre of the width of the rearward part of the chassis (1) of the baler.

3. A rectangular bale baler according to claim 1 or claim 2 characterised in that said feed means comprise two conveyor elements (11) which extend in a converging relationship from points adjacent to the ends of the pick-up means (4) to points adjacent to the sides of the orifice (10) for entry of the crop materials into the compression chamber (7).

4. A rectangular bale baler according to claim 3 characterised in that said conveyor elements (11) are each formed by an endless conveyor belt (12) which passes around rollers (13) with their axes vertical and which are provided at said points, one at least of the rollers (13) of each conveyor being positively driven.

5. A rectangular bale baler according to claim 4 characterised in that on their outside faces the conveyor belts (12) comprise entrainment means such as teeth (14) which are preferably flexible, roughnesses or equivalent means.

6. A rectangular bale baler according to claim 1 characterised in that the compression means comprise a piston (15) which is displaced with an alternating movement by a hydraulic jack.

7. A rectangular bale baler according to claim 6 characterised in that the compression means (15) are provided on one side of the baler behind the pick-up means (4), that the chassis (1) of the baler and the binding system (9) extend laterally beyond the pick-up means (4) on the side of the baler which is opposite to the compression means (15) for lateral discharge of the formed and bound bales, and that the lateral projecting part of the chassis (1) of the baler is arranged to constitute a binding twine store (20).

8. A rectangular bale baler according to any one of the preceding claims characterised in that the movable members of the baler are driven from a primary shaft (21) which is provided in the rearward part of the chassis (1) and to which the various drive and transmission mechanisms are connected, which primary shaft can be connected to the front power take-off shaft of the agricultural tractor or other vehicle to which the baler is connected.

**Patentansprüche**

1. Presse für rechteckförmige Ballen des Typs, der ein Chassis (1), das in einem vorderen Bereich eine Aufsammelvorrichtung (4) trägt, die quer zur Fahrtrichtung der Presse orientiert ist, eine Verdichtungskammer (7), die ebenfalls im Quersinne orientiert und auf dem Chassis — gesehen in Bewegungsrichtung der Presse bei der Arbeit — hinter der Aufsammelvorrichtung (4) vorgesehen ist, wobei die Verdichtungskammer (7) eine Eingangsöffnung (10) für die Ernteprodukte darbietet, die zur Aufsammelvorrichtung (4) hin orientiert ist, Zuführungsmittel (11), welche die durch die Aufsammelvorrichtung (4) aufgesammelten Ernteprodukte zu dieser Öffnung hin konvergieren lassen, um sie in die Verdichtungskammer (7) eindringer zu lassen, Verdichtungsmittel (15) für die Ernteprodukte in der Verdichtungskammer (7), ein System (19) zum Binden der Ballen, die durch die Verdichtungsmittel gebildet sind, und eine Einrichtung (2) zum Anschließen an eine Dreipunktanhängung (23) der Zugmaschine oder der landwirtschaftlichen Maschine oder des landwirtschaftlichen Fahrzeuges umfaßt, dadurch gekennzeichnet, daß die Einrichtung (2) zum Anschliessen an die Dreipunktanhängung (23) in einem rückwärtigen Bereich des Chassis (1) der Presse angeordnet ist und daß die Presse, die so an die Zugmaschine oder dgl. angekuppelt ist, mittels dieser Dreipunktanhängung (23) unterstützt ist.

2. Presse für rechteckförmige Ballen nach Anspruch 1, dadurch gekennzeichnet, daß die Verbindungseinrichtung (2) in Richtung auf die Mitte der Breite des rückwärtigen Bereichs des Chassis (1) der Presse angeordnet ist.

3. Presse für rechteckförmige Ballen nach Anspruch 1 oder 2, dadurch gekennzeichnet, daß die Zuführungsmittel durch zwei Transportelemente (11) gebildet werden, die sich entlang einer konvergierenden Stellung, ausgehend von Punkten nahe der Enden der Aufsammelvorrichtung (4) bis zu Punkten nahe der Eingangsöffnung (10) für die Produkte in die Verdichtungskammer (7) erstrecken.

4. Presse für rechteckförmige Ballen nach Anspruch 3, dadurch gekennzeichnet, daß die Transportelemente (11) jeweils durch ein Transportband ohne Ende (12) gebildet werden, das um Rollen mit senkrechten Achsen (13) läuft, die an den erwähnten Punkten vorgesehen sind, wobei wenigstens eine der Rollen (13) jedes Transporteurs positiv angetrieben wird.

5. Presse für rechteckförmige Ballen nach Anspruch 4, dadurch gekennzeichnet, daß die Transportbänder (12) auf ihren Außenflächen Mitnehmermittel, wie vorzugsweise flexible Zähne (14), Rauhigkeiten oder äquivalente Mittel tragen.

6. Presse für rechteckförmige Ballen nach Anspruch 1, dadurch gekennzeichnet, daß die Verdichtungsmittel durch einen Kolben (15) von alternativer Bewegung gebildet sind, dessen Verschiebung durch einen hydraulischen Zylinder sichergestellt ist.

7. Presse für rechteckförmige Ballen nach Anspruch 6, dadurch gekennzeichnet, daß die Verdichtungsmittel (15) auf einer Seite der Presse hinter der Aufsammelvorrichtung (4) vorgesehen sind, derart, daß das Chassis (1) der Presse und das Bindesystem (19) sich seitlich von der Aufsammelvorrichtung (4) zu der Seite der Presse erstrecken, die von den Verdichtungsmitteln (15) abgewandt sind, und zwar für ein seitliches Entladen der gebildeten und gebundenen Ballen, und daß der seitlich vorspringende Teil des Chassis (1) der Presse so angeordnet ist, daß er einen Vorrat für das Bindegarn (20) bildet.

8. Presse für rechteckförmige Ballen nach irgendeinem der voranstehenden Ansprüche, dadurch gekennzeichnet, daß der Antrieb der beweglichen Organe der Presse von einer Primärwelle (21) aus sichergestellt ist, die am rückwärtigen Bereich des Chassis (1) vorgesehen ist und die mit den verschiedenen Antriebsmechanismen und Transmissionen verbunden ist, wobei die Primärwelle mit der vorderen Zapfwelle des Ackerschleppers oder eines anderen Fahrzeuges verbunden werden kann, an dem die Ballenpresse angebracht ist.

FIG. 1

FIG. 2